# EUROPÄISCHE PATENTSCHRIFT

(11) **EP 2 173 515 B1**
(45) Veröffentlichungstag und Bekanntmachung des Hinweises auf die Patenterteilung: **07.12.2016**
(21) Anmeldenummer: 08801068.1
(22) Anmeldetag: 24.07.2008
(51) Int. Cl.: B23K 13/01, B23K 20/12, B23K 31/02, C21D 8/00, C21D 7/06

(54) **VERFAHREN ZUM FÜGEN VON ZWEI BAUTEILEN AUS METALLWERKSTOFF MIT VERFESTIGUNG UND WÄRMBEHANDLUNG MINDESTENS EINES TEILBEREICHES MINDESTENS EINES BAUTEILS VOR DEM FÜGEN**
METHOD OF JOINING TWO COMPONENTS MADE OF A METAL MATERIAL WITH STRENGTHENING AND HEAT TREATMENT OF AT LEAST A PART OF AT LEAST ONE COMPONENT BEFORE JOINING
PROCEDE D'ASSEMBLAGE DE DEUX COMPOSANTS EN MATERIAU METALLIQUE AVEC CONSOLIDATION ET TRAITEMENT THERMIQUE D'AU MOINS UNE PARTIE D'AU MOINS UN COMPOSANT AVANT L'ASSEMBLAGE

(30) Priorität: 04.08.2007 DE 102007036972
(43) Veröffentlichungstag der Anmeldung: 14.04.2010
(73) Patentinhaber: MTU Aero Engines AG, 80995 München (DE)
(72) Erfinder: BAMBERG, Joachim, 85221 Dachau (DE); HESSERT, Roland, 82211 Herrsching (DE); SATZGER, Wilhelm, 80804 München (DE); MACK, Thomas, 86698 Oberndorf (DE); GINDORF, Alexander, 85247 Schwabhausen (DE)
(86) Internationale Anmeldenummer: PCT/DE2008/001229
(87) Internationale Veröffentlichungsnummer: WO 2009/018803

(56) Entgegenhaltungen:
- EP-A- 1 698 711
- DE-A1-102004 058 146
- JP-A- 3 082 738
- US-A- 3 844 846
- US-A- 4 379 745
- US-A1- 2005 039 511
- US-A1- 2006 067 830

## Beschreibung

Die Erfindung betrifft ein Verfahren zum Fügen von zwei Bauteilen aus Metallwerkstoff, insbesondere von zwei Bauteilen aus Metallwerkstoff mit deutlich unterschiedlicher Gefügestruktur, der im Oberbegriff des Patentanspruchs 1 angegebenen Art (siehe, z.B., US3 844 846 A).

Zum Verbinden von zwei Bauteilen aus Metallwerkstoff sind aus dem Stand der Technik bereits eine Vielzahl von Fügeverfahren, insbesondere Schweißverfahren, als bekannt zu entnehmen. Insbesondere wenn die Werkstoffe aus unterschiedlichen Metallwerkstoffen wie beispielsweise einer Schmiedelegierung und einer Gusslegierung bestehen, ergibt sich jedoch die Problematik, dass an den beiden korrespondierenden Fügeflächen der beiden Bauteile ein relativ abrupter Übergang der Gefügestrukturen, der Elastizitätsmodule, der thermischen Ausdehnungseigenschaften, der Eigenspannungen sowie anderer werkstoffspezifischer Kennwerte vorliegen kann. Es ist klar, dass sich dieser abrupte Übergang bislang nachteilig auf die Festigkeit, die Prüfbarkeit und die Eigenspannungsausbildung, insbesondere im Bereich der Fügeflächen des zusammengefügten Bauteils, auswirkt.

Aus diesem Grund ist es aus dem Stand der Technik prinzipiell bereits bekannt, die beiden Bauteile unter Vermittlung eines dazwischen angeordneten, dritten Bauteils mittelbar miteinander zu verbinden, wobei das dazwischen angeordnete Bauteil Übergangswerte hinsichtlich des Gefüges und hinsichtlich der Festigkeit aufweist, welche zwischen denjenigen der eigentlich zu verbindenden Bauteile liegen. Allerdings ist dieses Verfahren äußerst umständlich, zumal zwei Fügeverbindungen mit möglichen Fehlstellen erzeugt werden.

Aufgabe der vorliegenden Erfindung ist es daher, ein Verfahren zum Fügen sowie eine Fügeverbindung von zwei Bauteilen aus Metallwerkstoff der eingangs genannten Art zu schaf fen, mit welchem die beiden Bauteile auf verbesserte Weise miteinander zu verbinden sind.

Diese Aufgabe wird erfindungsgemäß durch ein Verfahren zum Fügen von zwei Bauteilen aus Metallwerkstoff mit den Merkmalen des Patentanspruchs 1 gelöst. Vorteilhafte Ausgestaltungen mit zweckmäßigen und nichttrivialen Weiterbildungen der Erfindung sind in den jeweils abhängigen Patentansprüchen angegeben.

Um ein Verfahren zu schaffen, mittels welchem die beiden Bauteile aus Metallwerkstoff auf bedeutend verbesserte Weise miteinander zu fügen sind, ist es erfindungsgemäß vorgesehen, dass mindestens eines der Bauteile vor dem Fügen zumindest in einem Teilbereich seiner Fügefläche verfestigt und anschließend wärmebehandelt wird. Dadurch wird ein abrupter Übergang der Gefügestruktur, des Elastizitätsmoduls, der thermischen Ausdehnung, der Eigenspannungsausbildung oder von anderen Kennwerten der beiden zu fügenden Werkstoffe abgemildert, um somit eine verbesserte Verbindung zwischen den beiden Bauteilen aus Metallwerkstoff und Prüfbarkeit der Schweißnaht zu erreichen. Der Ort der Fügung und der

Ort des Übergangs des Werkstoffgefüges wird getrennt, indem induziert durch des Verfestigungsverfahrens eine tiefreichende, exponentiell auslaufende Gefügestruktur unter der entsprechenden Fügefläche erreicht wird. Dadurch wird die Werkstoffpaarung prüfbar und hinsichtlich ihrer Festigkeit unkritischer.

Die angesprochene Wärmebehandlung ist gemäß der Erfindung derart, dass hierdurch eine Rekristallisierung bewirkt wird. Die Verfestigung kann insbesondere eine tiefreichende Verfestigung sein.

Die Verfestigung und anschließende Wärmebehandlung kann beispielsweise einmalig oder mehrmalig nacheinander erfolgen, und zwar insbesondere abhängig von der gewünschten Struktur des Randschichtgefüges.

Zur weiteren Verfeinerung der Kernstruktur des Gussbauteils kann das oben beschriebene Verfahren mehrfach hintereinander angewendet werden.

In weiterer Ausgestaltung der Erfindung hat es sich dabei als besonders vorteilhaft gezeigt, wenn das entsprechende Bauteil vor dem Fügen über seine gesamte Fügefläche verfestigt wird. Somit wird über die ganze Fügeverbindung der erwünschte, graduell auslaufende

Übergang zwischen den beiden Teilwerkstoffen der zu fügenden Bauteile erreicht, um somit die Fügezone und den Gefügeübergang zu trennen. Als im Rahmen der Erfindung liegend ist es des Weiteren zu betrachten, dass gegebenenfalls auch beide Fügeflächen der beiden Bauteile verfestigt werden können.

Weitere Vorteile, Merkmale und Einzelheiten der Erfindung ergeben sich aus der nachfolgenden Beschreibung eines bevorzugten Ausführungsbeispiels sowie anhand der Zeichnungen; diese zeigen in:
- Figur 1: eine schematische Schnittansicht durch zwei Bauteile aus Metallwerkstoff, welche an zwei einander zugeordneten Fügeflächen mittels einer Fügeverbindung in einem Verfahren gemäß dem Stand der Technik verbunden worden sind; und in
- Figur 2: eine weitere schematische Schnittansicht durch zwei Bauteile aus Metallwerkstoff, welche an zwei aneinander zugeordneten Fügeflächen mittels einer Fügeverbindung miteinander verbunden worden sind, wobei das Gefüge eines der Bauteile vor dem Fügen zumindest in einem Teilbereich seiner Fügefläche angepasst worden ist.

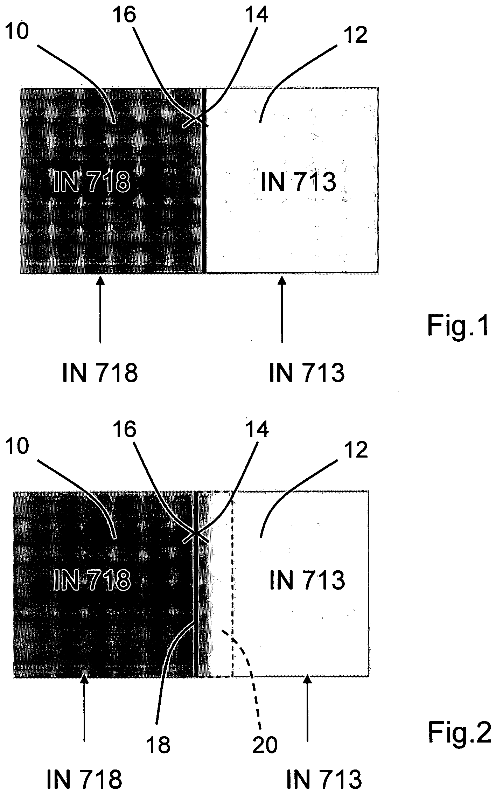

In den Figuren 1 und 2 sind jeweils in einer schematischen Schnittansicht zwei Bauteile 10, 12 aus Metallwerkstoff dargestellt, welche an zwei einander zugeordneten Fügeflächen 14, 16 mittels einer im Weiteren noch näher erläuterten Fügeverbindung verbunden worden sind. Während die beiden Bauteile 10, 12 gemäß Figur 1 in einem Verfahren nach dem Stand der Technik gefügt worden sind, ist bei den Bauteilen 10, 12 gemäß Figur 2 das im Weiteren näher erläuterte erfindungsgemäße Verfahren eingesetzt worden.

Die beiden Bauteile 10, 12 bestehen im vorliegenden Fall aus einer IN718-Schmiedelegierung sowie aus einem IN713-Gusswerkstoff. Beim Fügen der beiden Bauteile 10, 12 ergibt sich - bedingt durch die unterschiedlichen Metallwerkstoffe - dabei bislang die Problematik, dass ein abrupter Übergang der Gefügestrukturen, der Elastizitätsmodule, der thermischen Ausdehnungen, der Eigenspannungen und anderer werkstoffspezifischer Kennwerte im Bereich der Fügeverbindung zwischen den beiden Fügeflächen 14, 16 vorliegt.

Aus diesem Grund ist es beim vorliegenden Verfahren zum Fügen der beiden Bauteile 10, 12 gemäß Figur 2 vorgesehen, dass das Bauteil 12, welches aus dem IN713-Gusswerkstoff besteht, vor dem Fügen der beiden Bauteile 10, 12 im Bereich seiner Fügefläche 16 durch ein Oberflächenverfestigungsverfahren mechanisch verfestigt wird.

Ein derartiges Oberflächenverfestigungsverfahren ist beispielsweise bereits aus der DE 10 2004 058 146 A1 als bekannt zu entnehmen, deren Inhalt hiermit ausdrücklich als mitumfasst zu betrachten ist. Das dortige Oberflächenverfestigungsverfahren wird auch als Sonopeen-Verfähren bezeichnet, bei welchem ein Werkzeug mit z.B. in Ultraschallfrequenz angeregt wird und durch hämmernde Bewegungen die jeweilige Oberfläche des Bauteils verfestigt.

Alternativ zu dem vorbeschriebenen Oberflächenverfestigungsverfahren wäre es auch denkbar, die jeweilige Fügefläche 16 durch Kugelstrahlen, und Ultraschall-Kugelstrahlen, zu bearbeiten. Bei einem alternativen Verfahren wäre es darüber hinaus denkbar, dass die Fügefläche 16 des Bauteils 12 durch Festwalzen verfestigt wird. Als im Rahmen der Erfindung mitumfasst ist es zu betrachten, dass natürlich auch andere Bearbeitungsverfahren denkbar wären, mittels welchen der gewünschte Bereich des Bauteils 12 mechanisch verfestigt werden kann.

Durch die vorbeschriebenen Oberflächenverfestigungsverfahren wird eine tiefreichende, exponentiell auslaufende Verfestigung unter die Fügefläche 16 bzw. das Bauteil 12 eingebracht. Hierdurch erfolgt eine Änderung der Materialeigenschaften, welche sich insbesondere in einer geänderten Gefügestruktur, einem geänderten Elastizitätsmodul, einer geänderten thermischen Ausdehnung, einer geänderten Eigenspannung und anderer mechanischer Werkstoffeigenschaften äußern kann.

Als im Rahmen der Erfindung mitumfasst ist es zudem zu betrachten, dass auch lediglich ein Teilbereich der Fügefläche 16 verfestigt werden könnte, sofern hierdurch eine qualitativ hinreichende Fügeverbindung erzielt werden kann. Im vorliegenden Ausführungsbeispiel gemäß Figur 2 wird jedoch das Bauteil 12 mit dem IN713-Gusswerkstoff vor dem Fügen über seine gesamte Fügefläche 16 verfestigt.

Nachdem Verfestigen wird das Bauteil 12 in einem weiteren Verfahrensschritt im Bereich des zumindest verfestigten Teilbereichs der Fügefläche 16 einer Wärmebehandlung unterzogen. Dabei wird das Bauteil 12 vorliegend oberflächennah bzw. lokal behandelt. Hierdurch werden die Eigenschaften des Bauteils 12 im verfestigten Bereich der Fügefläche 16 gezielt eingestellt. Gemäß der Erfindung wird dabei eine Wärmebehandlung vorgenommen, bei welcher eine gesteuerte Rekristallisation des Bauteils 12 aus dem IN713-Gusswerkstoff erfolgt.

Im Anschluss an die Verfestigung bzw. Kaltumformung und an die Wärmebehandlung kann in einem dritten Verfahrensschritt das Fügen der beiden Bauteile 10, 12 vorgenommen werden. Das Fügen der beiden Bauteile 10, 12 aus Metallwerkstoff erfolgt gemäß der Erfindung durch eine Schweißverbindung in Form von induktivem Hochfrequenz-Pressschweißen. Hierzu werden die beiden Bauteile 10, 12 beispielsweise im Bereich der Fügestellen 14, 16 von einem geeigneten Induktor umgeben, der über einen Stromanschluss mit einem hochfrequenten Wechselstrom mit vorzugsweise einstellbarer Frequenz beaufschlagt wird. Durch den Induktor werden an den Bauteilrändern der beiden Bauteile 10, 12 im Bereich der Fügeflächen 14, 16 hochfrequente Wechselströme induziert, die die Bauteilränder erwärmen und plastifizieren. Sobald diese ausreichend plastifiziert sind, erfolgt ein axialer Stauchhub durch eine entsprechende Staucheinrichtung, mit der die beiden Bauteile 10, 12 zusammengepresst werden. Der Induktor- bzw. Schweißstrom kann dabei zu einem geeigneten Zeitpunkt vor, während oder nach dem Staubhub abgeschaltet werden.

In Figur 2, in welcher die beiden Bauteile 10, 12 nach dem Verschweißen dargestellt sind, ist es schematisch angedeutet, dass eine Fügezone 18 zwischen den beiden Fügeflächen 14, 16 und ein - durch eine gestrichelte Linie angedeuteter - Gefügeübergang 20 durch die vorgenommene Verfestigung und Rekristallisation voneinander getrennt sind. Zudem ist der Übergang zwischen den Bauteilen 12, 10 bzw. vom Schmiede- auf das Gussgefüge graduell auslaufend, also nicht scharf lokalisiert. Dadurch wird die Werkstoffpaarung prüfbar und festigkeitsmäßig unkritischer.

## Patentansprüche

1. Verfahren zum Fügen von zwei Bauteilen (10, 12) aus Metallwerkstoff, insbesondere zum Fügen von zwei Bauteilen (10,12) aus Metallwerkstoff mit deutlich unterschiedlicher Gefügestruktur, welche an zwei einander zugeordneten Fügeflächen (14, 16) mittels einer Fügeverbindung verbunden werden, wobei mindestens eines der Bauteile (12) vor dem Fügen zumindest in einem Teilbereich seiner Fügefläche (16) durch Kugelstrahlen oder durch Ultraschall-Kugelstrahlen oder durch ein Sonopeen-Verfahren mit einer exponentiell abnehmenden Verfestigung versehen wird **dadurch gekennzeichnet, dass** mittels einer Wärmebehandlung einer Rekristallisation unterzogen wird und die beiden Bauteile (10, 12) anschließend durch induktives Hochfrequenz-Pressschweißen oder Reibschweißen miteinander verbunden werden.

2. Verfahren nach Anspruch 1, **dadurch gekennzeichnet, dass** das Bauteil (12) vor dem Fügen über seine gesamte Fügefläche (16) verfestigt wird.

3. Verfahren nach einem der Ansprüche 1 bis 2, **dadurch gekennzeichnet, dass** als Bauteil (12) mit der zumindest in einem Teilbereich zu verfestigenden Fügefläche (16) ein Gusswerkstoff verwendet wird.

## Claims

1. Method of joining two components (10,12) made of a metal material, in particular method of joining two components (10,12) made of a metal material with clearly different joint structure, which are connected by means of a joint connection at two joint surfaces (14,16) associated with one another, wherein, before the joining, at least one of the components (12) Is provided in at least a partial area of the joining surface (16) thereof with an exponentially decreasing hardening, by shot peening or by ultrasonic shot peening or by a sonopeen method, **characterized in that** it is subjected by means of a heat treatment to a recrystallization, and the two components (10,12) are then connected to one another by inductive high-frequency pressure welding or friction welding,

2. Method according to Claim 1, **characterized in that**, before the joining, the component (12) is hardened over the entire joint surface (16) thereof.

3. Method according to any ane of Claims 1 to 2, **characterized in that** a casting material is used as component (12) with the joining surface (16) to be hardened in at least a partial area.

## Revendications

1. Procédé d'assemblage de deux composants (10, 12) en matière métallique, en particulier d'assemblage de deux composants (10, 12) en matière métallique présentant des microstructures nettement différentes, qui sont reliés au niveau de deux surfaces d'assemblage associées (14, 16) au moyen d'une liaison d'assemblage,
l'un au moins des composants (12) étant soumis à une solidification décroissante de façon exponentielle avant l'assemblage au moins dans une zone de sa surface d'assemblage (16) par grenaillage ou par grenaillage à ultrasons ou par un procédé Sonopeen, **caractérisé en ce que** l'on effectue une recristallisation par traitement thermique et l'on relie ensuite les deux composants (10, 12) entre eux par soudage par pression et induction à haute fréquence ou par soudage par friction.

2. Procédé selon la revendication 1, **caractérisé en ce que** le composant (12) est solidifié avant l'assemblage sur toute sa surface d'assemblage (16).

3. Procédé selon l'une des revendications 1 à 2, **caractérisé en ce qu'**une matière coulée est utilisée comme composant (12) pourvu d'au moins une surface d'assemblage (16) qui doit être solidifiée dans une zone.
